(19)

**Europäisches Patentamt**
**European Patent Office**
**Office européen des brevets**

(11)  **EP 1 608 899 B1**

(12)  **EUROPÄISCHE PATENTSCHRIFT**

(45) Veröffentlichungstag und Bekanntmachung des Hinweises auf die Patenterteilung:
**27.02.2008   Patentblatt 2008/09**

(21) Anmeldenummer: **04707134.5**

(22) Anmeldetag: **31.01.2004**

(51) Int Cl.:
*F16J 9/20* *(2006.01)*

(86) Internationale Anmeldenummer:
**PCT/DE2004/000150**

(87) Internationale Veröffentlichungsnummer:
**WO 2004/088179 (14.10.2004 Gazette 2004/42)**

(54) **KOLBENRING**

PISTON RING

SEGMENT DE PISTON

(84) Benannte Vertragsstaaten:
**DE FR GB PT**

(30) Priorität: **28.03.2003   DE 10314034**

(43) Veröffentlichungstag der Anmeldung:
**28.12.2005   Patentblatt 2005/52**

(73) Patentinhaber: **Federal-Mogul Burscheid GmbH**
**51399 Burscheid (DE)**

(72) Erfinder:
• **BREUER, Claus**
**61200 Wölfersheim (DE)**
• **MITTLER, Richard**
**51379 Leverkusen (DE)**

(56) Entgegenhaltungen:
**US-A- 2 591 920**

• **DATABASE WPI Section PQ, Week 197646 Derwent Publications Ltd., London, GB; Class Q52, AN 1976-L0864X XP002286090 -& SU 504 906 A (NIKIFOROV O A), 28. Februar 1976 (1976-02-28)**
• **PATENT ABSTRACTS OF JAPAN vol. 008, no. 054 (M-282), 10. März 1984 (1984-03-10) -& JP 58 207575 A (YANMAR DIESEL KK), 3. Dezember 1983 (1983-12-03)**
• **PATENT ABSTRACTS OF JAPAN vol. 008, no. 146 (M-307), 7. Juli 1984 (1984-07-07) -& JP 59 043260 A (YANMAR DIESEL KK), 10. März 1984 (1984-03-10)**

EP 1 608 899 B1

**Beschreibung**

Die Erfindung betrifft einen Kolbenring mit einem einen Stoß bildenden Schlitz, einer Lauffläche, einer inneren Umfangsfläche sowie dazwischen verlaufenden oberen und unteren Flanken, wobei im Bereich der inneren Umfangsfläche eine inkonstante Querschnittsstörung vorgesehen ist, die, in Umfangsrichtung gesehen, im Bereich des Stoßes größer ausgebildet ist als im dem Stoß diametral gegenüberliegenden Bereich. Der DE-C 39 20 449 ist ein selbstspannender gasabdichtender Kolbenring zu entnehmen, der im montierten Zustand mit seiner oberen Flanke die Nutflanke des Kolbens mittig bis innen berührt. Die untere Flanke ist gegenüber der Nutflanke so geneigt, dass diese ebenfalls mittig bis innen berührt wird. Im inneren Umfangsbereich ist eine als Fase ausgebildete Querschnittsstörung vorgesehen.

In der US-A 2,591,920 wird ein Kolbenring beschrieben, der im Bereich seiner inneren Umfangsfläche mit unterschiedlich gestalteten Querschnittsstörungen versehen ist. Durch die JP-A 09196171 ist ein Kolbenring für Brennkraftmaschinen bekannt geworden, der, über den Umfang gesehen, unterschiedliche Wandstärken aufweist. Heutige am Markt erhältliche Kolbenringe sehen oft eine Vertwistung des Kolbenringes durch eine über den Umfang des Kolbenringes gleichbleibende Querschnittsstörung (z.B. Innenfase oder -winkel) vor. Diese konstante Querschnittsstörung bewirkt unter der Einbaubiegespannung im Ring aufgrund der Kolbenringtheorie eine, über den Umfang gesehen, ungleichmäßige Vertwistung des Kolbenringes.

Der Erfindung liegt die Aufgabe zugrunde, einen gattungsgemäßen Kolbenring dahingehend weiterzubilden, dass der Kolbenring in allen Laufphasen ohne Gasdruckbelastung nur mit der unteren Laufflächenkante an der Zylinderwand und mit der Innenkante an der unteren Nutflanke anliegt und gleichzeitig auch zu einer verbesserten Ölverbrauchskontrolle beiträgt.

Diese Aufgabe wird dadurch gelöst, dass der Kolbenring eine Wandstärke aufweist, die in Umfangsrichtung variiert, wobei im Bereich des Stoßes die Wandstärke kleiner ausgebildet ist als im dem Stoß diametral gegenüberliegenden Bereich, wobei das Verhältnis zwischen Wandstärke und Querschnittsstörung stets so ausgebildet ist, dass der Kolbenring, über den Umfang gesehen, einen konstanten Twistwinkel aufweist. Vorteilhafte Weiterbildungen des Erfindungsgegenstandes sind den Unteransprüchen zu entnehmen.

Mit den Veränderungen bzw. Überlagerungen von Kolbenringwandstärke und inkonstanter Querschnittsstörung kann nun eine Kolbenringvertwistung herbeigeführt werden, die, über den Umfang des Kolbenringes gesehen, einen konstanten Twistwinkel mit sich bringt. Mit dem Erfindungsgegenstand ist es nun möglich, dass der Kolbenring nur mit der unteren Laufflächenkante an der Zylinderwand und mit der Innenkante an der unteren Nutflanke anliegt. Über die Art der Wandstärkenveränderung in Verbindung mit der jeweils angesprochenen Querschnittsstörung können unterschiedliche jedoch über den Umfang gleichbleibende Twistwinkel herbeigeführt werden.

Durch eine sich über den Umfang des Kolbenringes inkonstant verändernde Querschnittsstörung wird erreicht, dass das Flächenträgheitsmoment über den Umfang des Ringes derart variiert werden kann, dass sich eine wiederum über den Umfang gleichbleibende Vertwistung des Ringes einstellt.

Die Querschnittsstörungen können sowohl durch eine Innenfase als auch durch einen Innenwinkel gebildet werden, wobei selbige entweder im Bereich der oberen oder im Bereich der unteren Flanke vorgesehen werden kann.

Das Verhältnis zwischen Wandstärke und Querschnittsstörung soll zur Realisierung eines über den Umfang des Kolbenringes gleichbleibenden Twistwinkels folgender Formel genügen:

$$\varphi = Mt \,/\, G{*}I\,(\varphi)$$

worin

    $\varphi$ der Twistwinkel
    Mt die Biegebelastung
    G der Gleitmodul
    I das polare Flächenträgheitsmoment

sind.

Der Erfindungsgegenstand ist anhand eines Ausführungsbeispiels in der Zeichnung dargestellt und wird wie folgt beschrieben. Es zeigen:

Figur 1      Kolbenring mit inkonstanter Querschnittsstörung;

Figur 2 bis 4      Verschiedene Querschnitte durch den Kolbenring gemäß Figur 1;

Figur 5      Kolbenring gemäß Stand der Technik mit gleicher Wandstärke und gleichmäßiger Querschnittsstörung;

Figur 6      Auftragung der Twistwinkel gemäß Stand der Technik (Figur 5) sowie des erfindungsgemäßen Kolbenringes entsprechend Figur 1.

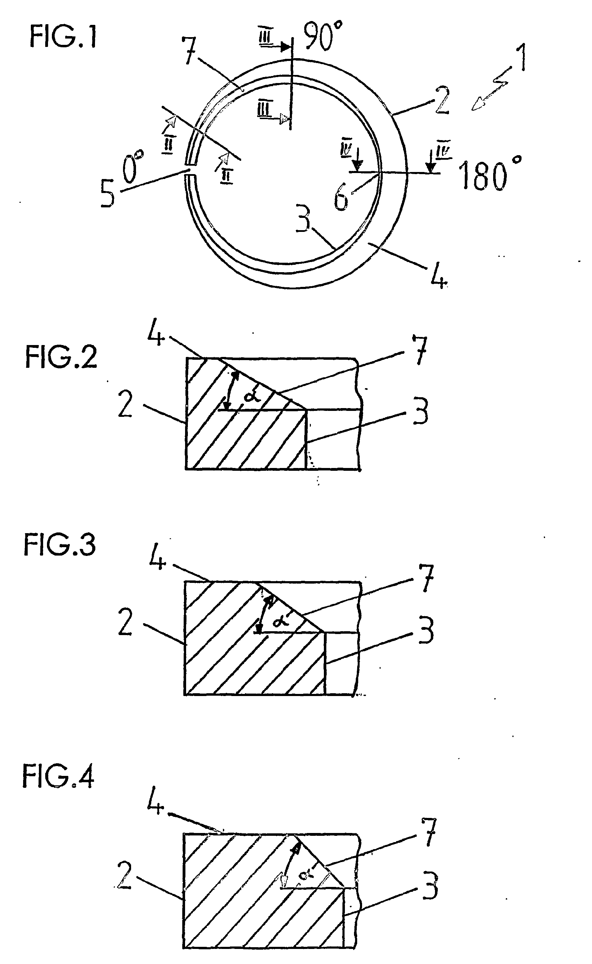

Figur 1 zeigt einen Kolbenring 1, der beispielsweise in der ersten oder zweiten Nut eines Kolbens (nicht dargestellt) eingesetzt werden kann. Der Kolbenring 1 ist in der Draufsicht dargestellt, so dass lediglich die Lauffläche 2, die innere Umfangsfläche 3 sowie die obere Flanke 4 erkennbar sind. Im durch einen Schlitz gebildeten Stoß 5 weist der Kolbenring 1 eine vorgebbare Wandstärke auf. Die Wandstärke des Kolbenringes 1 verändert sich, ausgehend vom Stoß 5 (0°) in Richtung des diametral gegenüberliegenden Bereiches 6 (180°), der den Ringrücken bildet. Am Ringrücken 6 ist eine Wandstärke gegeben, die gegenüber dem stoßbereichsseitigen Materialquerschnitt dicker ausgebildet ist. In Figur 1 ist dargestellt, dass im Bereich der oberen Flanke 4 eine in die innere Umfangsfläche 3 einlaufende Querschnittsstörung 7 in Form einer Fase eingebracht ist. Die Fase 7 beginnt mit gleich großem Querschnitt am Stoß 5 und verringert sich zum Ringrücken 6 hin kontinuierlich in beiden Umfangsrichtungen. Durch diese Maßnahme wird ein Kolbenring 1 mit über dem Umfang konstanten, d.h. gleichbleibenden, Twishuinkel geschaffen.

Die Figuren 2 bis 4 zeigen verschiedene Schnitte durch den Kolbenring 1 gemäß Figur 1, und zwar ausgehend vom Stoß 5 (0°). Figur 2 zeigt einen Schnitt nahe dem Stoß 5, etwa bei 10°. Figur 3 zeigt einen Schnitt durch den Ring 1 bei etwa 90°. Figur 4 zeigt einen Schnitt durch den Ring 1 bei etwa 180° (Ringrücken 6).

Die Schnitte gemäß Figuren 2 bis 4 zeigen die Lauffläche 2, die innere Umfangsfläche 3 und die als Fase ausgebildete Querschnittsstörung 7, die von der inneren Umlauffläche 3 in die obere Flanke 4 einläuft. Die Schnitte zeigen, dass die Fase 7 ihre größte Erstreckung am Stoß 5 (Fig. 1) hat und sich in Richtung des Ringrückens 6 verringert. Auf diese Weise werden, in Umfangsrichtung gesehen, auch unterschiedliche Winkel $\alpha$ zwischen der oberen Flanke 4 und der inneren Umfangsfläche 3 gebildet.

In den Figuren 1 bis 4 sind Querschnittsstörungen 7, in Form von Fasen angesprochen. Selbige können jedoch ebenso gut durch winkelförmige Querschnitte in inkonstanter Ausführung gebildet werden.

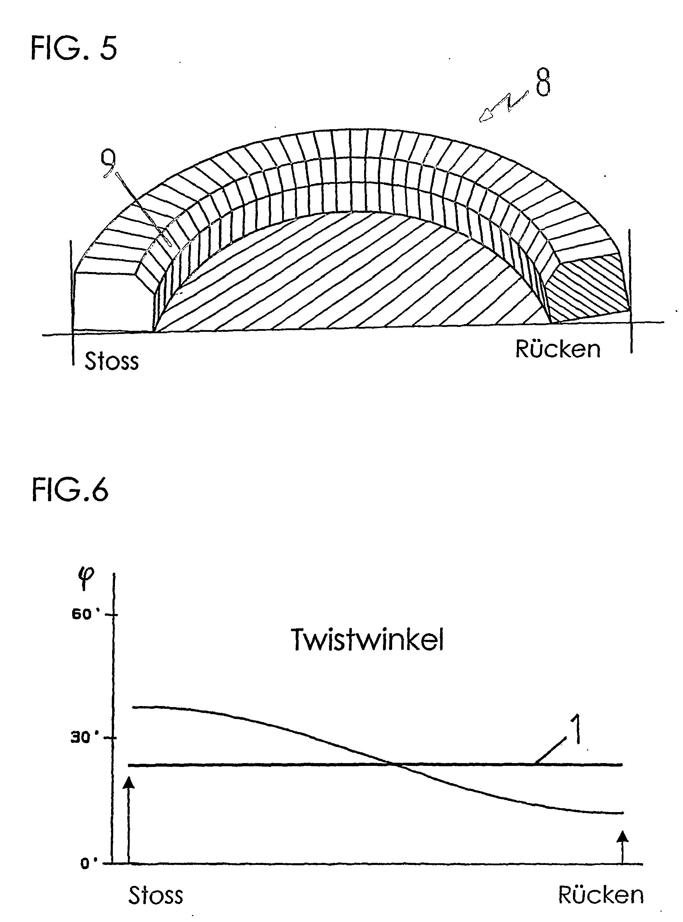

Figur 5 zeigt einen dem Stand der Technik zuzuordnenden Kolbenring 8, und zwar in vertwistetem, d.h. eingebautem, Zustand. Der Kolbenring 8 beinhaltet eine durchgehend gleiche Wandstärke und ist mit einer in Umfangrichtung gleichbleibenden Innenfase 9 als Querschnittsstörung versehen.

Das Schaubild gemäß Figur 6 zeigt, dass der Kolbenring 8, ausgehend vom Stoß (0°), in Richtung des Ringrückens unterschiedliche Twistwinkel einnimmt. Die konstante Querschnittsstörung bewirkt bei gleichbleibender radialer Wandstärke unter der Einbaubiegespannung im Ring 8 aufgrund der Kolbenringtheorie eine über den Umfang ungleichmäßige Vertwistung des Kolbenringes 8. Bei Kolbenringen 8 soll eigentlich erreicht werden, dass der Ring in allen Laufphasen ohne Gasdruckbelastung mit gleichem Twistwinkel nur mit der unteren Lauffflächenkante an der Zylinderwand und mit der Innenkante an der unteren Nutflanke anliegt, was jedoch - wie insbesondere Figur 6 zu entnehmen ist - mit einer ungleichmäßigen Vertwistung, in Umfangsrichtung gesehen, so nicht optimal herbeigeführt werden kann.

Erst mit Kolbenringen 1, wie sie in den Figuren 1 bis 4 dargestellt sind, kann eine Vergleichmäßigung des Twistwinkels, über den Umfang gesehen, herbeigeführt werden, so dass nun in allen Laufphasen des Ringes 1, ohne Gasdruckbelastung der erwünschte Effekt bei darüber hinaus verbesserter Ölverbrauchskontrolle realisiert werden kann.

**Patentansprüche**

1. Kolbenring mit einem einen Stoß (5) bildenden Schlitz, einer Lauffläche (2), einer inneren Umfangsfläche (3) sowie dazwischen verlaufenden oberen und unteren Flanken (4), wobei im Bereich der inneren Umfangsfläche (3) eine inkonstante Querschnittsstörung (7) vorgesehen ist, die, in Umfangsrichtung gesehen, im Bereich des Stoßes (5) größer ausgebildet ist als im dem Stoß (5) diametral gegenüberliegenden Bereich (6), **dadurch gekennzeichnet, dass** der Kolbenring eine Wandstärke aufweist, die in Umfangsrichtung variiert, wobei im Bereich des Stoßes (5) die Wandstärke kleiner ausgebildet ist als im dem Stoß (5) diametral gegenüberliegenden Bereich (6), wobei das Verhältnis zwischen Wandstärke und Querschnittsstörung stets so ausgebildet ist, dass der Kolbenring, über den Umfang gesehen, einen konstanten Twistwinkel ($\varphi$) aufweist.

2. Kolbenring nach Anspruch 1, **dadurch gekennzeichnet, dass** das Verhältnis zwischen Wandstärke und Querschnittsstörung stets so ausgebildet ist, dass bei gegebenen Widerstandsmomenten ($Wt$) und Biegebelastungen ($Mt$) im eingebauten Zustand, über den Umfang gesehen, der konstante Twistwinkel ($\varphi$) folgender Formel genügt:

$$(\varphi)=Mt/G^*I\,(\varphi),$$

worin

$\varphi$ der Twistwinkel,
$G$ der Gleitmodul,
$I$ das polare Flächenträgheitsmoment,
$Mt$ die Biegebelastung,

sind.

3. Kolbenring nach Anspruch 1 oder 2, **dadurch gekennzeichnet, dass** die Querschnittsstörung (7) durch eine Fase gebildet ist.

4. Kolbenring nach Anspruch 3, **dadurch gekennzeichnet, dass** die Fase (7) in Umfangsrichtung unter einem Windel $\alpha$ verläuft, wobei der Winkel $\alpha$ in Umfangsrichtung veränderlich ist.

5. Kolbenring nach Anspruch 3, **dadurch gekennzeichnet, dass** die Fase (7) in Umfangsrichtung unter einem Winkel $\alpha$ verläuft, wobei der Winkel $\alpha$ in

Umfangsrichtung konstant ist.

**6.** Kolbenring nach Anspruch 1 oder 2, **dadurch gekennzeichnet, dass** die Querschnittsstörung durch eine winkelförmige Ausnehmung gebildet ist.

**7.** Kolbenring nach einem der Ansprüche 1 bis 6, **dadurch gekennzeichnet, dass** die Querschnittsstörung (7) im Bereich der oberen oder unteren Flanke (4) vorgesehen ist.

## Claims

**1.** Piston ring with a slot forming a joint (5), a run surface (2), an inner peripheral surface (3) and, running in between, upper and lower flanks (4), wherein in the area of the inner peripheral surface (3) a non-constant cross-section disruption (7) is provided which, viewed in the peripheral direction, is formed larger in the area of the joint (5) than in the area (6) lying diametrically opposite the joint (5), **characterised in that** the piston ring has a wall thickness which varies in the peripheral direction, wherein in the area of the joint (5) the wall thickness is formed smaller than in the area (6) lying diametrically opposite the joint (5), wherein the ratio between wall thickness and cross-section disruption is always formed so that the piston ring, viewed over the periphery, has a constant twist angle ($\varphi$).

**2.** Piston ring according to claim 1, **characterised in that** the ratio between wall thickness and cross-section disruption is always formed so that for given resistance moments (Wt) and bending stresses (Mt) in the fitted state, viewed over the periphery, the constant twist angle ($\varphi$) fulfils the following formula:

$$\varphi = Mt/G*I\,(\varphi)$$

wherein

$\varphi$ = twist angle
G = shear modulus
I = polar geometric moment of inertia
Mt = bending stress.

**3.** Piston ring according to claim 1 or 2, **characterised in that** the cross-section disruption (7) is formed by a chamfer.

**4.** Piston ring according to claim 3, **characterised in that** the chamfer (7) runs in the peripheral direction at an angle $\alpha$, wherein angle $\alpha$ varies in the peripheral direction.

**5.** Piston ring according to claim 3, **characterised in that** the chamfer (7) in the peripheral direction runs at an angle $\alpha$, wherein angle $\alpha$ is constant in the peripheral direction.

**6.** Piston ring according to claim 1 or 2, **characterised in that** the cross-section disruption is formed by an angular recess.

**7.** Piston ring according to any one of claims 1 to 6, **characterised in that** the cross-section disruption (7) is provided in the area of the upper or lower flank (4).

## Revendications

**1.** Segment de piston avec une fente formant une coupure (5), une face de portée (2), une face circonférentielle intérieure (3) et des flanes (4) supérieur et intérieur s'étendant entre ces faces, sachant qu'une perturbation de section (7) non constante est prévue dans la région de la face circonférentielle intérieure (3), perturbation qui, considéré en direction circonférentielle, est réalisée plus grande dans la région de la coupure (5) que dans la région (6) diamétralement opposée à la coupure (5), **caractérisé en ce que** le segment de piston présente une épaisseur de paroi qui varie en direction circonférentielle, sachant que l'épaisseur de paroi est réalisée plus petite dans la région de la coupure (5) que dans la région (6) diamétralement opposée à la coupure (5), sachant que le rapport entre l'épaisseur de paroi et la perturbation de section est en permanence prévu de telle sorte que le segment de piston, considéré sur la circonférence, présente un angle de torsion constant ($\varphi$).

**2.** Segment de piston selon la revendication 1, **caractérisé en ce que** le rapport entre l'épaisseur de paroi et la perturbation de section est en permanence prévu de telle sorte que, pour des couples de résistance donnés (Wt) et des sollicitations en flexion données (Mt), dans l'état installé, considéré sur la circonférence, l'angle de torsion constant ($\varphi$) satisfait à la formule suivante :

$$(\varphi) = Mt / G \times I\,(\varphi)$$

où:

$\varphi$ est l'angle de torsion,
G est le module de glissement,
I est le couple surfacique d'inertie polaire,
Mt est la sollicitation en flexion.

**3.** Segment de piston selon la revendication 1 ou 2, **caractérisé en ce que** la perturbation de section (7) est formée par un chanfrein.

**4.** Segment de piston selon la revendication 3, **caractérisé en ce que** le chanfrein (7) s'étend en direction circonférentielle sous un angle α, l'angle α étant variable en direction circonférentielle.

**5.** Segment de piston selon la revendication 3, **caractérisé en ce que** le chanfrein (7) s'étend en direction circonférentielle sous un angle α, l'angle α étant constant en direction circonférentielle.

**6.** Segment de piston selon la revendication 1 ou 2, **caractérisé en ce que** la perturbation de section est formée par un évidement angulaire.

**7.** Segment de piston selon l'une des revendications 1 ou 6, **caractérisé en ce que** la perturbation de section (7) est prévue dans la région du flane supérieur (4) ou du flanc inférieur (4).

FIG.1

FIG.2

FIG.3

FIG.4

# FIG. 5

8

9

Stoss

Rücken

# FIG.6

$\varphi$

60°

Twistwinkel

30°

1

0°

Stoss

Rücken

**EP 1 608 899 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3920449 C
- US 2591920 A
- JP 09196171 A